# EUROPEAN PATENT APPLICATION

(11) **EP 4 667 278 A1**
(43) Date of publication of application: **24.12.2025**
(21) Application number: 24201840.6
(22) Date of filing: 23.09.2024
(51) Int. Cl.: B60L 53/16, B60L 53/18

(54) **APPARATUS AND METHOD FOR CHARGING ELECTRIC VEHICLE**

(30) Priority: 20.06.2024 KR 20240080296
(71) Applicant: LG Electronics Inc., Yeongdeungpo-gu Seoul 07336 (KR)
(72) Inventor: SHIN, Jongyeon, 06772 Seoul (KR); KIM, Jintae, 06772 Seoul (KR); KIM, Miran, 06772 Seoul (KR)
(74) Representative: Vossius & Partner Patentanwälte Rechtsanwälte mbB

(57) **Abstract**

An apparatus for charging an electric vehicle according to the embodiment may include a main body with a predetermined space on one side; a connector seated in the predetermined space of the main body and having a compatible adapter mounted on the front; an unlocking device configured to unlock the connector from the compatible adapter or unlock the connector on which the compatible adapter is mounted from the main body; and a controller configured to receive a charging use signal from a user, select an unlocking target based on the charging use signal received from the user, and provide an unlocking signal for the unlocking target to the unlocking device.

## Description

### BACKGROUND

Embodiments relate to an apparatus and a method for charging an electric vehicle for preventing theft of compatible adapters.

In general, electric vehicles (hereinafter referred to as 'EV') and plug-in hybrid electric vehicles (hereinafter referred to as 'PHEV') may be charged at professional charging stations such as a gas station and may be charged by inserting the charging plug of a charging device equipped with a cable for charging and a charging plug into the connection area (vehicle side socket) of EV and PHEV vehicles (On-Site method).

These charging devices have North American Charging System (NACS) type or Combined Charging System (CSS) type connectors/adapters with different charging specifications according to different standards in each country.

However, when the connector is separated from the adapter to charge an electric vehicle, both types of connectors/adapters are unlocked from the main body, so there is a risk of the other adapter being stolen while the user uses one connector.

Additionally, as the charging device has a plurality of connectors/adapters, its weight increases, requiring considerable force for the elderly or women to directly insert/extract the adapter.

### SUMMARY

An object of the embodiment is to provide an apparatus and a method for charging an electric vehicle to prevent theft of the adapter while using the connector.

Additionally, another object of the embodiment is to provide an apparatus and a method for charging an electric vehicle for easily charging by the elderly or women.

In order to solve the above problems, an apparatus for charging an electric vehicle according to the embodiment may include a main body with a predetermined space on one side; a connector seated in the predetermined space of the main body and having a compatible adapter mounted on the front; an unlocking device configured to unlock the connector from the compatible adapter or unlock the connector on which the compatible adapter is mounted from the main body; and a controller configured to receive a charging use signal from a user, select an unlocking target based on the charging use signal received from the user, and provide an unlocking signal for the unlocking target to the unlocking device.

The apparatus for charging an electric vehicle may further include a sensor part configured to detect whether the compatible adapter and the connector are fastened or whether the compatible adapter and the main body are fastened, in which the controller may determine a fastening state of the compatible adapter based on whether the compatible adapter and the connector are fastened or whether the compatible adapter and the main body are fastened.

The apparatus for charging an electric vehicle may further include an output part configured to output a warning signal, in which the controller may output a warning signal when the controller determines that the unlocking target is the connector and the compatible adapter is not fastened to the main body.

The apparatus for charging an electric vehicle of claim may further include an auxiliary drive device configured to control polarity conversion or elastic repulsion between the compatible adapter and the main body to seat the compatible adapter in the main body or separate the compatible adapter from the main body, in which the controller may output an unlocking signal for the connector on which the compatible adapter is mounted when the unlocking target is a connector on which the compatible adapter is mounted based on the charging use signal, and the controller provides an activation signal to the auxiliary drive device when the controller checks that the compatible adapter is unlocked from the main body.

The unlocking device may include a gear shaft, a first fixing part configured to fasten the compatible adapter to the connector on one side of the gear shaft, and a second fixing part configured to fasten the compatible adapter to the main body on the other side of the gear shaft.

The unlocking device may include a first gear configured to rotate the gear shaft, and a second gear configured to engage with the first gear and drive the first gear, on the gear shaft.

When the compatible adapter and the connector are fastened through the first fixing part, the compatible adapter and the main body may be separated through the second fixing part, and the compatible adapter and the connector may be separated through the first fixing part when the compatible adapter and the main body are fastened to each other through the second fixing part.

The charging use signal may include impact specification information.

The connector may include a NACS type impact standard, and the adapter includes a CCS type charging standard.

In addition, in order to solve the above problems, an apparatus for charging an electric vehicle according to the embodiment may include a communication part; and a processor, in which the processor may be configured to receive a user charging use signal from the communication part, select an unlocking target based on the user charging use signal received from the communication part, and provide an unlocking signal for the unlocking target to the unlocking device.

The processor may determine the fastening state of the compatible adapter based on whether the compatible adapter and the connector are fastened or whether the compatible adapter and the main body are fastened, received through the sensor part.

The processor may provide a warning signal to an output part when the processor determines that the unlocking target is the connector and the compatible adapter is not fastened to the main body.

Based on the charging use signal, the processor may output an unlocking signal for the connector on which the compatible adapter is mounted when the unlocking target is a connector on which the compatible adapter is mounted, and the processor may provide an activation signal to the auxiliary drive device when the processor checks that the compatible adapter is unlocked from the main body.

The charging use signal may include impact specification information. The connector may include a NACS type impact standard, and the adapter includes a CCS type charging standard.

In addition, in order to solve the above problems, a method for charging an electric vehicle according to the embodiment may include receiving a charging use signal from a user; selecting an unlocking target based on the charging use signal; and providing an unlocking signal for the unlocking target to an unlocking device.

The method for charging an electric vehicle may further include determining the fastening state of the compatible adapter based on whether the compatible adapter and the connector are fastened or whether the compatible adapter and the main body are fastened, received through the sensor part.

The method for charging an electric vehicle may further include providing a warning signal to an output part when determining that the unlocking target is the connector and the compatible adapter is not fastened to the main body.

Based on the charging use signal, the unlocking target outputs an unlocking signal for the connector on which the compatible adapter is mounted when the unlocking target is a connector on which the compatible adapter is mounted and may provide an activation signal to the auxiliary drive device when checking that the compatible adapter is unlocked from the main body.

The connector may include a NACS type impact standard, and the adapter includes a CCS type charge standard.

The embodiment determines the fastening state of the compatible adapter based on whether the compatible adapter and the connector or the compatible adapter and the main body are connected, thereby preventing theft of the compatible adapter while using the connector.

Additionally, the embodiment allows the connector equipped with the compatible adapter to be inserted/extracted from the main body with little force by using an auxiliary drive device.

### BRIEF DESCRIPTION OF THE DRAWINGS

FIG. 1 is a view illustrating an apparatus for charging an electric vehicle according to an embodiment.
FIG. 2 is a view mainly illustrating a connector equipped with a compatible adapter.
FIG. 3 is a view illustrating an unlocking device for an apparatus for charging an electric vehicle according to an embodiment.
FIG. 4 is a view illustrating a state where the second fixing part of the unlocking device according to the embodiment is fastened to the main body.
FIG. 5 is a view illustrating various gear engagement structures of an unlocking device according to an embodiment.
FIG. 6 is a schematic perspective view illustrating a mounting structure of an auxiliary drive device according to an embodiment.
FIG. 7 is a view illustrating an auxiliary drive device according to another embodiment.
FIG. 8 is a configuration view illustrating the controller of an apparatus for charging an electric vehicle according to an embodiment.
FIG. 9 is a flowchart illustrating a method for charging an electric vehicle according to an embodiment.
FIG. 10 is a flowchart illustrating a method for charging an electric vehicle in a NACS usage environment according to an embodiment.
FIGS. 11 and 12 are views illustrating the operation of the unlocking device in a NACS usage environment according to an embodiment.
FIG. 13 is a flowchart illustrating a method for charging an electric vehicle in a CCS usage environment according to an embodiment.
FIGS. 14 and 15 are views illustrating the operation of the unlocking device in a CCS usage environment according to an embodiment.

### DETAILED DESCRIPTION OF THE EMBODIMENTS

Hereinafter, the embodiment will be described in detail with reference to the attached drawings. Since the embodiments may be subject to various changes and have various forms, specific embodiments will be illustrated in the drawings and described in detail in the text. However, this is not intended to limit the embodiment to a specific disclosed form, and should be understood to include all changes, equivalents, and substitutes included in the spirit and technical scope of the embodiment.

Terms such as "first", "second", or the like may be used to describe various components, but the components should not be limited by the terms. The above terms are used for the purpose of distinguishing one component from another component. Additionally, terms specifically defined in consideration of the configuration and operation of the embodiment are only for explaining the embodiment and do not limit the scope of the embodiment.

In the description of the embodiment, the case where each element is described as being formed "top(on)" or "bottom(under)" includes a case where two elements are in direct contact with each other or a case where one or more other elements are disposed (indirectly) between the two elements. In addition, when expressed as ""top(on)" or "bottom(under)", based on one element, it can include not only the upward direction but also the downward direction.

In addition, relational terms such as "top/upper portion/on" and "bottom/lower portion/under" used below do not necessarily require or imply any physical or logical relationship or order between such entities or elements and may be used to distinguish one entity or element from another entity or element.

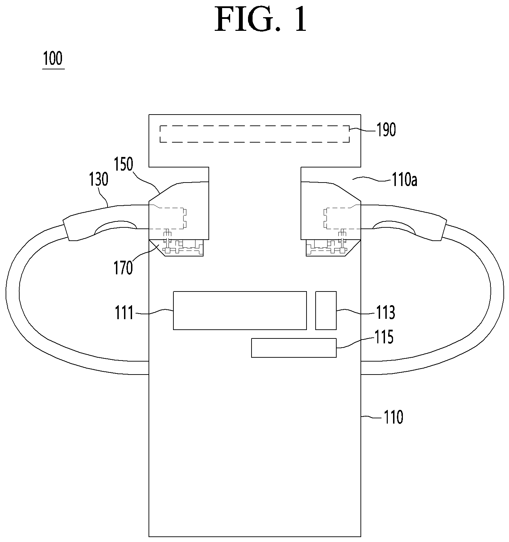

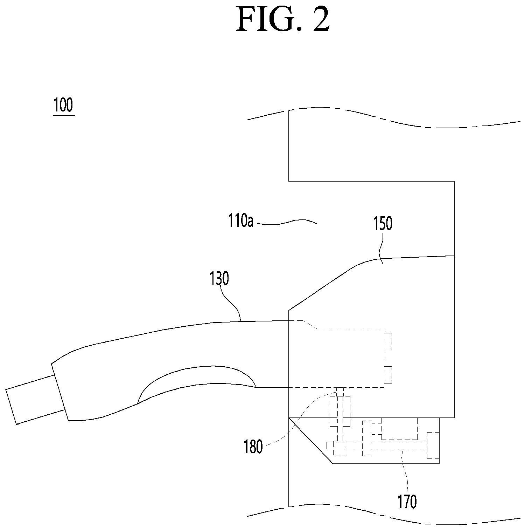

FIG. 1 is a view illustrating an apparatus for charging an electric vehicle according to an embodiment, and FIG. 2 is a view mainly illustrating a connector equipped with a compatible adapter.

Referring to FIGS. 1 and 2, the apparatus for charging an electric vehicle 100 according to the embodiment may include a main body 110, a connector 130 equipped with a compatible adapter 150, an unlocking device 170, and a controller 190.

The main body 110 is formed in a square box shape, and various components, including a power module for electric charging, may be mounted therein. The shape of the main body 110 is not limited to a square box and may be formed in various shapes such as a cylindrical box or a polygonal box shape.

A predetermined space 110a may be provided on at least one side of the main body 110. A connector 130 equipped with a compatible adapter 150 may be disposed in the predetermined space 110a. Here, the predetermined space 110a may be in the shape of a groove formed inside the main body 110.

An output part 111, such as a voice or display, may be provided on the front surface of the main body 110 to output the charging status. The output part 111 may display information such as remaining charging time, elapsed charging time, or charging power amount. Additionally, the output part 111 of the embodiment may output a warning signal for poor connection of the compatible adapter. The output part 111 may provide a warning signal to the manager's server or mobile phone.

An input part 113 may be provided on the front surface of the main body 110 to receive an input signal from the user. The input signal may include charging start, request information related to charging, charging standard information, or the like. The input part 113 may include a display or a keyboard, but its type is not limited. The input part 113 may be configured as a touch display and integrated with the output part 111.

A payment part 115 may be provided on the front surface of the main body 110. The payment part 115 may be configured to accept coins or bills, or may be configured to allow payment through an RFID (Radio Frequency Identification) card.

A connector 130 may be connected to one side of the main body 110 through a cable. The connector 130 may be connected to an electric vehicle.

The connector 130 may be seated in a predetermined space of the main body 110. A compatible adapter 150 may be mounted on the front surface of the connector 130. In the embodiment, one compatible adapter 150 is mounted on the connector 130, but the number of compatible adapters is not limited.

The connector 130 may have a NACS type charging standard. The compatible adapter 150 may have a CCS type charging standard. The charging specifications of the connector 130 and compatible adapter 150 are not limited to this.

The unlocking device 170 may be provided at the lower portion of the compatible adapter 170. The unlocking device 170 may fasten connector 130 to the compatible adapter 150. The unlocking device 170 may fasten the compatible adapter 150 to the main body 110. The unlocking device 170 may unlock the connector 130 to be separated from the compatible adapter 150 while the compatible adapter 150 is fastened to the main body 110. The unlocking device 170 may unlock the compatible adapter 150 to be separated from the main body 110 while the connector 130 is fastened to the compatible adapter 150.

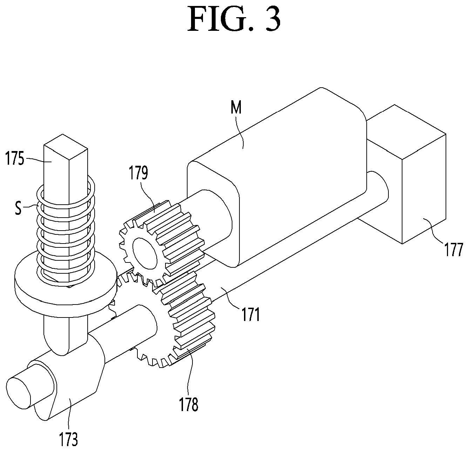

FIG. 3 is a view illustrating an unlocking device for an apparatus for charging an electric vehicle according to an embodiment.

Referring to FIG. 3, the unlocking device 170 according to the embodiment is provided with a rod-shaped gear shaft 171, and a first fixing part 175 may be disposed on one side of the gear shaft 171. The first fixing part 175 may be raised and lowered by the raising and lowering member 173 fixed to the gear shaft 171. The raising and lowering member 173 may be formed in an asymmetric oval shape, and one side thereof may have a convex area. The convex area of the raising and lowering member 173 may be disposed on the upper portion of the gear shaft 171 by rotation of the gear shaft 171, thereby raising the first fixing part 175.

The first fixing part 175 raised by the raising and lowering member 173 may be fitted and coupled to a coupling hole formed in the connector 130. When the gear shaft 171 is rotated and the convex area of the raising and lowering member 173 moves downward, the first fixing part 175 may be lowered by the elastic member S supported on one side of the connector 130. At this time, the first fixing part 175 may be separated from the coupling hole of the connector 130. The elastic member S may be formed to surround the first fixing part 175, the lower part of the elastic member S is supported by the first fixing part 175, and the upper part of the elastic member S may be supported on the lower surface of the connector 130.

A second fixing part 177 may be disposed on the other side of the gear shaft 171. The second fixing part 177 may be formed in the shape of a bar extending vertically in the drawing.

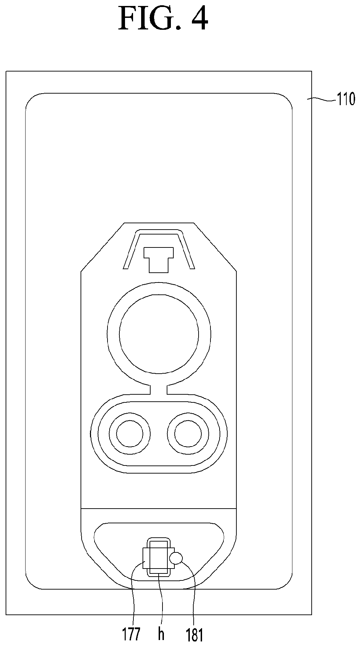

FIG. 4 is a view illustrating a state where the second fixing part of the unlocking device according to the embodiment is fastened to the main body.

As illustrated in FIG. 4, the second fixing part 177 may be rotated in the horizontal direction by rotation of the gear shaft. A through-hole h may be formed in the main body 110 so that the second fixing part 177 may be inserted. The through-hole h may be formed in a shape corresponding to the second fixing part 177 and may be formed larger than the second fixing part 177. When the second fixing part 177 is rotated while being inserted into the through-hole of the main body 110, the second fixing part 177 is disposed to form a 90-degree angle with the through-hole h and may be fixed to the main body 110.

As illustrated in FIGS. 1 to 4, when the first fixing part 175 is coupled to the connector 130 by the unlocking device 170, the second fixing part 177 is separated from the main body 110 and thus the connector 130 equipped with the compatible adapter 150 may be separated from the main body 110. On the other hand, when the first fixing part 175 is separated from the connector 130, the second fixing part 177 may be coupled to the main body 110 to separate the connector 130 from the compatible adapter 150.

A first gear 178 that rotates the gear shaft 171 may be coupled to the gear shaft 171. The first gear 178 may be fixed to the gear shaft 171. A second gear 179 is provided in engagement with the first gear 178, and a motor M is connected to the second gear 179 to drive the second gear 179.

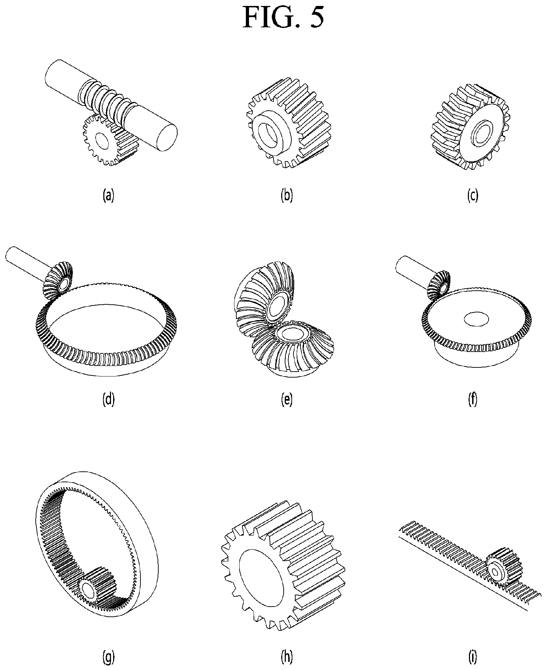

FIG. 5 is a view illustrating various gear engagement structures of an unlocking device according to an embodiment.

As illustrated in FIGS. 5a to 5i, the unlocking device may include a structure of a worm gear (a), a helical gear (b), a double helical gear (c), a spiral bevel gear (d), a miter gear (e), and a straight bevel gear (f), internal tooth gear (g), spur gear (h), or rack and pinion gear (i).

The unlocking device 170 may rotate the gear shaft 171 using the various gear structures described above.

Returning to FIG. 1, the apparatus for charging an electric vehicle 100 according to the embodiment may include a first sensor 180 for detecting whether the compatible adapter 150 and the connector 130 are fastened.

The first sensor 180 may be provided on one side of the first fixing part 175 of the unlocking device 170. The first sensor 180 may detect the first fixing part 175 from one side of the first fixing part 175 when the first fixing part 175 raises to be coupled to the connector 130. The first sensor 180 may be installed on one side of a compatible adapter.

As illustrated in FIG. 4, the sensor part for detecting whether the compatible adapter 150 is fastened may include a second sensor 181. The second sensor 181 may be disposed on one side of the second fixing part 177. The second sensor 181 may detect whether the compatible adapter 150 and the main body 110 are fastened by detecting the position of the second fixing part 177. The second sensor 181 may be installed on one side of the main body.

The apparatus for charging an electric vehicle according to the embodiment may further include an auxiliary drive device. The auxiliary drive device allows compatible adapters to be easily separated from the main body.

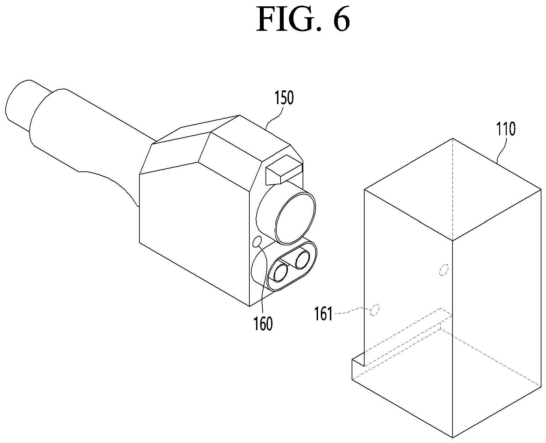

FIG. 6 is a schematic perspective view illustrating a mounting structure of an auxiliary drive device according to an embodiment.

As illustrated in FIG. 6, the auxiliary drive device may include a first electromagnet 160 mounted on the front of the compatible adapter 150 and a second electromagnet 161 mounted on the main body 110.

Two first electromagnets 160 may be installed symmetrically in front of the compatible adapter 150, and the number thereof is not limited. The first electromagnet 160 may have unipolarity.

The second electromagnet 161 may be mounted on the main body 110 at a position corresponding to the first electromagnet 160 when the compatible adapter 150 is fastened to the main body 110. The second electromagnet 161 may include two electromagnets, but the number thereof is not limited. The second electromagnets 161 may have bipolarity.

When the compatible adapter 150 is separated from the main body 110, the second electromagnet 161 may be controlled to have the same polarity as the first electromagnet 160. Accordingly, the compatible adapter 150 may be easily separated from the main body 110.

When the compatible adapter 150 is fastened to the main body 110, the second electromagnet 161 may be controlled to have a different polarity from the first electromagnet 160. Accordingly, the compatible adapter 150 may be easily fastened to the main body 110.

At this time, a sensor may be further installed in the main body to detect the insertion and extraction of a connector equipped with a compatible adapter into a predetermined space.

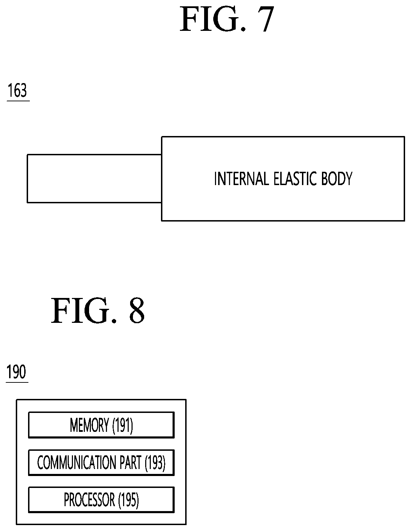

FIG. 7 is a view illustrating an auxiliary drive device according to another embodiment.

As illustrated in FIG. 7, the auxiliary drive device may be made of an internal elastic body 163, and the repulsive force of the internal elastic body 163 may be controlled to facilitate fastening and separation between the compatible adapter and the main body.

Returning to FIG. 1, the controller 190 may provide an unlocking signal to the unlocking device 170 to unlock the connector 130 or the connector 130 equipped with the compatible adapter 150 from the main body 110. Additionally, the controller 190 can prevent the theft of the compatible adapter 150 by detecting the fastening state of the compatible adapter 150.

FIG. 8 is a configuration view illustrating the controller of an apparatus for charging an electric vehicle according to an embodiment.

Referring to FIG. 8, the controller 190 of the apparatus for charging an electric vehicle according to the embodiment may include a memory 191, a communication part 193, and a processor 195.

The memory 191 may store information related to electric vehicle charging and control programs for fastening and disconnecting a connector/compatible adapter from the main body. A signal input from an input part or information on the fastening state of a compatible adapter received from a sensor may be stored.

Memory 191 may be main memory accessed and used by processor 195. For example, the memory 191 may be a volatile memory such as DRAM. Alternatively, memory 191 may be persistent memory and the persisitent memory may be, for example, NVDIMM.

The communication part 193 may be a device that includes hardware and software necessary for wired or wireless connection with other network devices. The communication part 193 may transmit and receive data signals related to electric vehicle charging or control signals for locking/unlocking.

The communication part 193 may transmit and receive a user's input signal, a fastening information signal of a compatible adapter, an unlocking signal, or the like.

The communication part 193 may perform communication using not only LTE and 5G, but also Low Power Wireless Network (LPWN) and Low Power Wide Area Network (LPWAN) such as NB-IoT, LoRa, SigFox, and LTE-CAT1.

The communication part 193 may perform communication using a communication method using a wireless LAN such as WiFi 802.11 a/b/g/n as well as a wired LAN (Local Area Network). In addition, the communication part 193 may communicate with internal or external devices using communication methods such as NFC and Bluetooth.

The processor 195 is a type of central processing unit and may control overall operations related to electric vehicle charging.

The processor 195 may include any type of device capable of processing data. Here, the 'processor' may mean, for example, a data processing device built into hardware that has a physically structured circuit to perform a function expressed by code or instructions included in a program. Examples of data processing devices built into hardware may include a microprocessor, central processing unit (CPU), processor core, multiprocessor, and application-specific integrated circuit (ASIC) and field programmable gate array (FPGA), but are not limited thereto.

Hereinafter, a method for charging an electric vehicle performed by the processor of the controller will be described in detail.

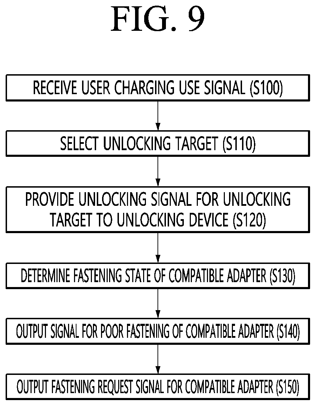

FIG. 9 is a flowchart illustrating a method for charging an electric vehicle according to an embodiment.

Referring to FIG. 9, the processor may receive a charging use signal through the input part (S100). The user may input a charging use signal through the input part. The charging use signal may include request information related to charging and charging standard information. The charging standard information may include a NACS type or CCS type charging standard.

The processor has the user's previous charging history and may load information about the charging standard used by the user from memory or an external server.

The processor may select an unlocking target based on the received user charging use signal (S110). For example, if the charging standard information is NACS type, the processor may select the connector separated from the compatible adapter as the unlocking target. Alternatively, if the charging standard information is CCS type, the processor may select a connector equipped with a compatible adapter as the unlocking target.

The processor may provide an unlocking signal for the unlocking target to the unlocking device (S120).

If the unlocking target is a connector equipped with a compatible adapter, the processor may provide an unlocking signal to the unlocking device to unlock the connector equipped with the compatible adapter.

The processor may provide an unlocking signal to the unlocking device to unlock the connector from the compatible adapter if the unlocking target is a connector from which the compatible adapter is separated.

The processor may determine the fastening state of the compatible adapter (S130). The processor may determine whether the compatible adapter and connector are fastened from the first sensor. The processor may determine whether the compatible adapter and the main body are fastened from the second sensor.

The processor may output a signal for poor fastening of the compatible adapter based on the fastening state of the compatible adapter (S140).

For example, if the processor determines that the unlocking target is a connector equipped with a compatible adapter and the compatible adapter and the connector are not fastened, the processor may output a signal for poor fastening with the connector.

The processor may output a fastening request signal between the compatible adapter and the connector based on the poor fastening signal (S150).

If the processor determines that the unlocking target is a connector from which a compatible adapter has been separated and that the compatible adapter and the main body are not fastened, the processor may output a signal for poor fastening with the main body.

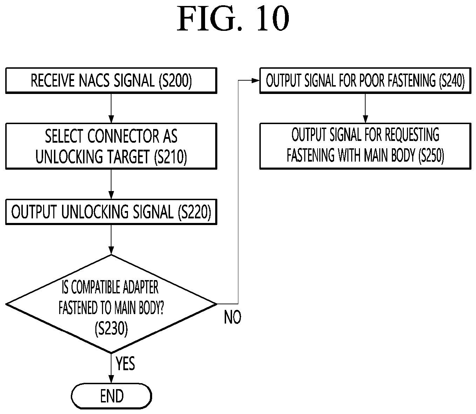

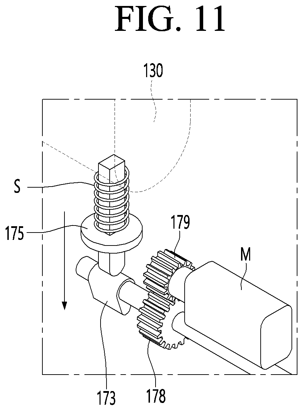

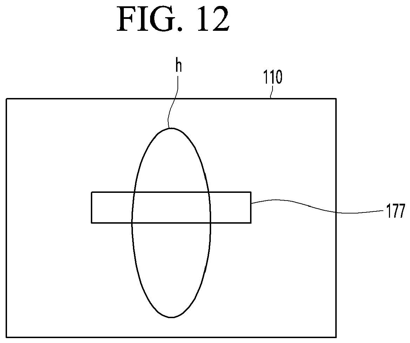

FIG. 10 is a flowchart illustrating a method for charging an electric vehicle in a NACS usage environment according to an embodiment, and FIGS. 11 and 12 are views illustrating the operation of the unlocking device in a NACS usage environment according to an embodiment.

Referring to FIG. 10, the processor may receive a user charging use signal including NACS charging standard information (S200). Alternatively, the processor may load the user's previous charging history from memory.

The processor may select a connector with the NACS charging standard as the unlocking target (S210).

The processor may output an unlocking signal to unlock the connector from the compatible adapter (S220).

As illustrated in FIG. 11, the unlocking device may unlock the connector 130 from the compatible adapter 150 by rotating the raising and lowering member 173 so that the bottom of the raising and lowering member 173 is convex.

As illustrated in FIG. 12, the unlocking device unlocks the connector from the compatible adapter and simultaneously rotates the second fixing part 177 to form a 90 degree angle with the hole h formed in the main body 110 to fix the compatible adapter to the main body.

Returning to FIG. 10, the processor may determine the fastening state of the compatible adapter by determining whether the compatible adapter and the main body are fastened through the second sensor (S230).

The processor may terminate when it determines that a compatible adapter is fastened to the main body.

If the processor determines that the compatible adapter is not fastened to the main body, the processor may output a signal for poor fastening between the compatible adapter and the main body (S240).

The processor may output a signal for requesting fastening between the compatible adapter and the main body (S250).

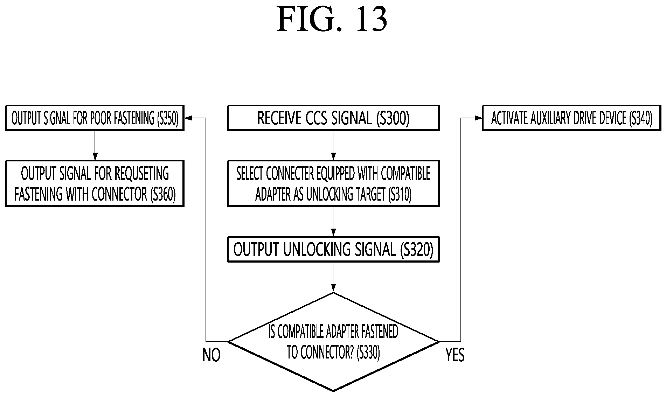

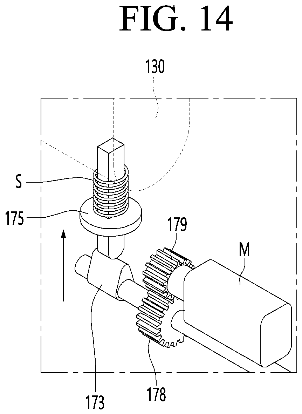

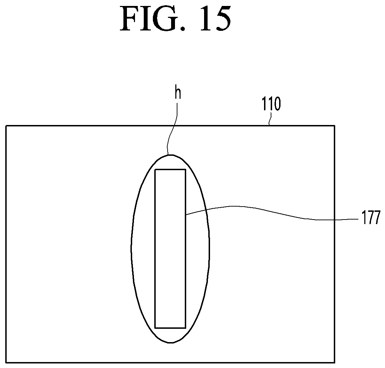

FIG. 13 is a flowchart illustrating a method for charging an electric vehicle in a CCS usage environment according to an embodiment, and FIGS. 14 and 15 are views illustrating the operation of the unlocking device in a CCS usage environment according to an embodiment.

Referring to FIG. 13, the processor may receive a user charging use signal including CCS charging standard information (S300).

The processor may select a connector with the CCS charging standard as the unlocking target (S310).

The processor may output an unlocking signal to unlock the connector equipped with a compatible adapter from the main body (S320).

As illustrated in FIG. 14, the unlocking device may fix the compatible adapter 150 to the connector 130 by rotating the raising and lowering member 173 so that the upper portion of the raising and lowering member 173 is convex.

As illustrated in FIG. 15, the unlocking device fixes the compatible adapter to the connector and rotates the second fixing part 177 to form a 0 degree angle with the hole h formed in the main body 110 to separate the compatible adapter from the main body.

Returning to FIG. 13, the processor may determine the fastening state of the compatible adapter by determining whether the compatible adapter and the connector are connected through the first sensor (S330).

The processor may activate the auxiliary drive device when it is determined that a compatible adapter is fastened to the connector (S340). As a result, women and the elderly may easily seat or separate a connector equipped with a compatible adapter from the main body.

If the processor determines that the compatible adapter is not fastened to the connector, the processor, the processor may output a signal for poor fastening of compatible adapters and connectors (S350).

The processor may output a signal for requesting fastening between a compatible adapter and a connector (S360).

Although the above has been described with reference to the drawings and embodiments, those skilled in the art will be able to understand that various modifications and changes may be made to the embodiments without departing from the technical spirit of the embodiments described in the claims below.

### Explanation of symbols

110: main body
130: connector
150: compatible adapter
170: unlocking device
190: controller

## Claims

1. An apparatus for charging an electric vehicle comprising:
a main body (110) with a predetermined space on one side;
a connector (130) seated in the predetermined space of the main body (110) and having a compatible adapter (150) mounted on the front;
an unlocking device (170) configured to unlock the connector (130) from the compatible adapter (150) or unlock the connector (130) on which the compatible adapter (150) is mounted from the main body (110); and
a controller (190) configured to receive a charging use signal from a user, select an unlocking target based on the charging use signal received from the user, and provide an unlocking signal for the unlocking target to the unlocking device.

2. The apparatus for charging an electric vehicle of claim 1, further comprising:
a sensor part (180, 181) configured to detect whether the compatible adapter (150) and the connector (130) are fastened or whether the compatible adapter (150) and the main body (110) are fastened,
wherein the controller (190) determines a fastening state of the compatible adapter (150) based on whether the compatible adapter (150) and the connector (130) are fastened or whether the compatible adapter (150) and the main body (110) are fastened.

3. The apparatus for charging an electric vehicle of claim 2, further comprising:
an output part (111) configured to output a warning signal,
wherein the controller (190) outputs a warning signal when the controller (190) determines that the unlocking target is the connector (130) and the compatible adapter (150) is not fastened to the main body (110).

4. The apparatus for charging an electric vehicle of claim 2 or 3, further comprising:
an auxiliary drive device configured to control polarity conversion or elastic repulsion between the compatible adapter (150) and the main body (110) to seat the compatible adapter (150) in the main body (110) or separate the compatible adapter (150) from the main body (110),
wherein the controller (190) outputs an unlocking signal for the connector (130) on which the compatible adapter (150) is mounted when the unlocking target is a connector (130) on which the compatible adapter (150) is mounted based on the charging use signal, and the controller (190) provides an activation signal to the auxiliary drive device when the controller (190) checks that the compatible adapter (150) is unlocked from the main body (110).

5. The apparatus for charging an electric vehicle of any one of claims 1 to 4, wherein the unlocking device includes:
a gear shaft (171),
a first fixing part (175) configured to fasten the compatible adapter (150) to the connector (130) on one side of the gear shaft (171), and
a second fixing part (177) configured to fasten the compatible adapter (150) to the main body (110) on the other side of the gear shaft (171).

6. The apparatus for charging an electric vehicle of claim 5,
wherein the unlocking device includes a first gear (178) configured to rotate the gear shaft (171), and a second gear (179) configured to engage with the first gear (178) and drive the first gear (178), on the gear shaft (171).

7. The apparatus for charging an electric vehicle of claim 5 or claim 6,
wherein when the compatible adapter (150) and the connector (130) are fastened through the first fixing part (175), the compatible adapter (150) and the main body (110) are separated through the second fixing part (177), and
wherein the compatible adapter (150) and the connector (130) are separated through the first fixing part (175) when the compatible adapter (150) and the main body (110) are fastened to each other through the second fixing part (177).

8. The apparatus for charging an electric vehicle of any one of claims 1 to 7,
wherein the charging use signal includes impact specification information.

9. The apparatus for charging an electric vehicle of any one of claims 1 to 8,
wherein the connector (130) includes a NACS type impact standard, and the adapter includes a CCS type charging standard.

10. A method for charging an electric vehicle comprising:
receiving a charging use signal from a user;
selecting an unlocking target based on the charging use signal; and
providing an unlocking signal for the unlocking target to an unlocking device.

11. The method for charging an electric vehicle of claim 10, further comprising:
determining the fastening state of the compatible adapter (150) based on whether a compatible adapter (150) and a connector (130) are fastened or whether the compatible adapter (150) and the main body (110) are fastened, received through the sensor part (180, 181).

12. The method for charging an electric vehicle of claim 11, further comprising:
providing a warning signal to an output part (111) when determining that the unlocking target is the connector (130) and the compatible adapter (150) is not fastened to the main body (110).

13. The method for charging an electric vehicle of claim 11 or 12, further comprising:
Based on the charging use signal, outputting an unlocking signal for the connector (130) on which the compatible adapter (150) is mounted when the unlocking target is a connector (130) on which the compatible adapter (150) is mounted.

14. The method for charging an electric vehicle of claim 13, further comprising:
providing an activation signal to the auxiliary drive device when checking that the compatible adapter (150) is unlocked from the main body (110).

15. The method for charging an electric vehicle of any one of claims 10 to 14,
Wherein the charging use signal includes impact standard information, the connector (130) includes a NACS type impact standard, and the adapter includes a CCS type charge standard.
